# EUROPÄISCHE PATENTSCHRIFT

(11) **EP 1 214 544 B1**
(45) Veröffentlichungstag und Bekanntmachung des Hinweises auf die Patenterteilung: **30.06.2004**
(21) Anmeldenummer: 01955311.4
(22) Anmeldetag: 15.06.2001
(51) Int. Cl.: F16L 23/14

(54) **FLANSCHPROFIL ZUM AUFSTECKEN AUF STOSSRÄNDER VON LUFTKANALELEMENTEN**
FLANGE PROFILE FOR ATTACHMENT TO ABUTTING AIR CHANNEL ELEMENTS
PROFILE FLASQUE A EMBOITER SUR LES BORDS DE BUTEE D'ELEMENTS DE CANALISATIONS D'AIR

(30) Priorität: 21.07.2000 DE 20012782 U
(43) Veröffentlichungstag der Anmeldung: 19.06.2002
(73) Patentinhaber: GEBHARDT-STAHL GMBH, 59457 Werl (DE)
(72) Erfinder: GEBHARDT, Manfred, 59494 Soest (DE)
(74) Vertreter: Patentanwälte Meinke, Dabringhaus und Partner
(86) Internationale Anmeldenummer: PCT/EP2001/006805
(87) Internationale Veröffentlichungsnummer: WO 2002/008654

(56) Entgegenhaltungen:
- DE-A- 4 303 150
- DE-U- 9 114 679
- DE-U- 9 320 128
- US-A- 4 940 264

## Beschreibung

Die Erfindung richtet sich auf ein Flanschprofil zum Aufstecken auf Stoßränder von Luftkanalelementen und zur Aufnahme von Eckwinkeln zur Bildung eines Montagerahmens, wobei die Flanschprofile querschnittlich im wesentlichen L-förmig ausgebildet sind, wobei ein L-Schenkel als einseitig offener doppelwandiger Schenkel zum Übergreifen der Randbereiche der Luftlcanalelemente und der andere Schenkel als Hohlkammer zur Aufnahme eines Eckwinkelschenkels profiliert ist, wobei im Übergangsbereich dieser beiden Schenkel durch Rückfalzung um 180° eine die beiden Schenkel trennende Doppelwand gebildet ist, die einen der Wandbereiche mit ihrer Rückfalznase berührt.

Die Erfindung geht aus beispielsweise von dem Gebrauchsmuster DE-91 14 679-U1 der Anmelderin oder von Flanschprofilen, wie sie in der EP-0 085 355-A1 bzw. DE-32 03 204-A1 beschrieben sind.

Die bekannten Profile, insbesondere das gattungsbildende Profil, zeichnen sich dadurch aus, daß sie bereits für eine hohe Dichtigkeit gegen Leckageluft aus dem Luftkanal sorgen. Es sind auch Zusatzdichtungen im Profilinneren bekannt, z.B. durch DE 36 18 822 C2, DE 43 03 150 A1 oder DE 93 20 128 U1. Gleichwohl kann es immer noch zu Undichtigkeiten insbesondere dann führen, wenn sich die Luftkanäle leicht verbiegen, so daß zwischen Luftkanalwand und aufgestecktem Profil Luft eintreten und dann quer durch den zur Aufnahme der Eckschenkel dienenden Profilbereich entweicht.

Hier Abhilfe zu schaffen, ist Aufgabe der Erfindung, wobei erfindungsgemäß diese Aufgabe dadurch gelöst wird, daß der Wandbereich und die Rückfalznase über eine Laserschweißnaht miteinander verbunden sind.

Dadurch, daß eine Laserschweißnaht vorgesehen ist, ist es möglich, einen Bereich des Profiles als Hohlkammer auszuführen und gegenüber dem Aufsteckbereich des Profiles luftdicht abzuschließen. Die Laserschweißnaht sorgt dabei dafür, daß bei ihrer Anbringung nicht, wie bei herkömmlichen Schweißnähten der Fall, die Gefahr besteht, daß die Profile sich beim Schweißen verwinden oder in anderer Weise verformen.

Die Kammerbildung kann dabei in unterschiedlicher Weise erfolgen, nämlich einmal dergestalt, daß durch die Rückfalzung um 180° das Profil eine glatte Wand in derjenigen Fläche aufweist, die in der Gebrauchslage in der Trennfugenebene liegt. In diesem Falle ist die Schweißnaht in dieser Wand vorgesehen.

Wird die Rückfalzung aus dem Blech, das in der Trennfugenebene liegt, nach innen vorgenommen, so liegt die erfindungsgemäße Laserschweißnaht in dem entsprechenden, von der Trennfugenebene rückwärtigen Profilwandbereich. Das Abdichtergebnis des darüber liegenden Profilbereiches durch die Schweißnaht ist dabei das gleiche, wie im umgekehrt gefalzten Falle.

Es versteht sich von selbst, daß die Laserschweißnaht nicht zwingend durchgängig angebracht werden muß. Wie auch bei herkömmlichen Schweißungen bekannt, kann die Laserschweißnaht auch periodisch bzw. getaktet eingesetzt werden, wobei es in einem solchen Falle nicht extrem auf die Dichtigkeit, sondern auf die Verwindungssteifigkeit eines so hergestellten Profiles ankommt.

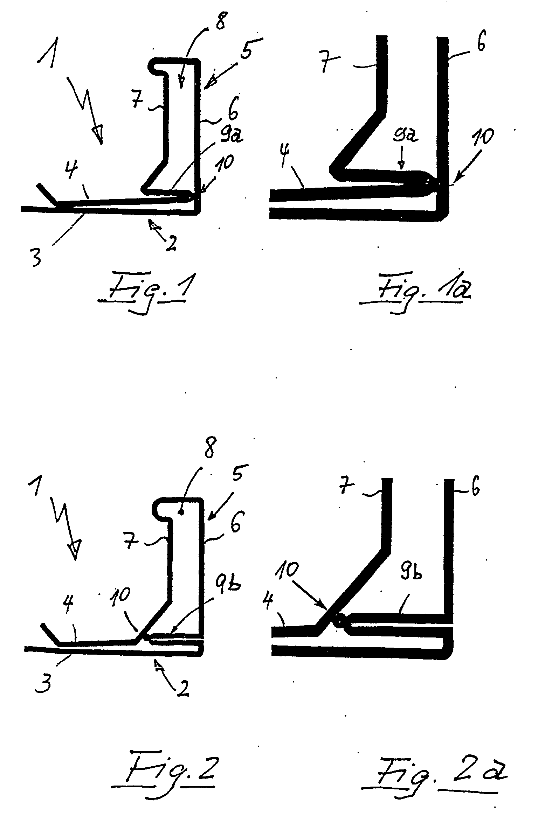

Weitere Merkmale, Einzelheiten und Vorteile der Erfindung ergeben sich aufgrund der nachfolgenden Beschreibung sowie anhand der Zeichnung. Diese zeigt in
- Fig. 1 und 2: zwei unterschiedlich gestaltete, erfindungsgemäße Flanschprofile sowie in den entsprechend danebenliegenden
- Fig. a bzw. 2a: vergrößerte Bereiche des Profiles im Schnitt mit angedeuteter Schweißnaht.

Das allgemein mit 1 bezeichnete Flanschprofil wird aus einem Blechband im Wege der Kaltverformung profiliert, es ist im wesentlichen querschnittlich L-förmig, mit einem doppellagigen L-Steg 2, dessen beide Schenkel 3 und 4 über die Stirnkante eines Luftkanales geschoben werden, und einem zweiten L-Schenkel 5, dessen beide Schenkelbleche 6 und 7 im Inneren eine mit 8 bezeichnete Hohlkammer bilden, in die in der Gebrauchslage Eckwinkelschenkel eingesteckbar sind, worauf es hier nicht näher ankommt.

In den Fig. 1 und 2 sind die funktionell gleichen Teile mit den gleichen Bezugszeichen versehen.

In beiden Ausführungsbeispielen liegt die Profilwand 6 des die Hohlkammer bildenden L-Schenkels 5 in der Gebrauchslage in der Trennfugenebene. Auf diese Wand wird dann beispielsweise eine elastische Dichtung aufgebracht od. dgl. Im Falle des Ausführungsbeispieles nach Fig. 1 wird der untere Bereich der Kammer 8 von einer Rückfalzung des Blechteiles erreicht, welches die von der Trennfugenebene abgewandte Rückwand 7 bildet. Diese rückwärtige Falz ist im Falle der Fig. 1 mit 9a bezeichnet.

Im Falle der Fig. 2 wird diese die Kammer abschließende untere Falzung vom Blech 6 gebildet, welches die Trennfugenebene darstellt, diese Rückfalzung ist in Fig. 2 mit 9b bezeichnet.

Erkennbar stoßen die Rückfalzungen 9a bzw. 9b jeweils an die gegenüberliegende Wand, im ersten Falle an die Wand 6, im zweiten Falle an die Wand 7. Der Stirnbereich dieser Rückfalzung ist dabei mit der erfindungsgemäßen Laserschweißnaht 10 an dieser Wand fixiert, wie sich dies insbesondere aus den vergrößerten Darstellungen der Fig. 1a und 2a ergibt.

## Patentansprüche

1. Flanschprofil zum Aufstecken auf Stoßränder von Luftkanalelementen und zur Aufnahme von Eckwinkeln zur Bildung eines Montagerahmens, wobei das Flanschprofil (1) querschnittlich im wesentlichen L-förmig ausgebildet sind, wobei ein L-Schenkel (2) als einseitig offener doppelwandiger Schenkel zum Übergreifen der Randbereiche der Luftkanalelemente und der andere Schenkel (5) als Hohlkammer (8) zur Aufnahme eines Eckwinkelschenkels profiliert ist, wobei im Übergangsbereich dieser beiden Schenkel (2, 5) durch Rückfalzung um 180° eine die beiden Schenkel (2, 5) trennende Doppelwand gebildet ist, die einen der Wandbereiche (6 bzw. 7) mit ihrer Rückfalznase (9a bzw. 9b) berührt,
**dadurch gekennzeichnet,**
**daß** der Wandbereich (6 bzw. 7) und die Rückfalznase (9a bzw. 9b) über eine Laserschweißnaht (10) miteinander verbunden sind.

2. Flanschprofil nach Anspruch 1,
**dadurch gekennzeichnet,**
**daß** sich die Laserschweißnaht (10) in der glatten in der Trennfugenebene in der Gebrauchslage liegenden Wand (6) befindet.

3. Flanschprofil nach Anspruch 1,
**dadurch gekennzeichnet,**
**daß** sich die Laserschweißnaht (10) in der der Trennfugenebene abgewandten rückwärtigen Profilwand (7) befindet.

## Claims

1. Flange profile for placing onto joint edges of air duct elements and for receiving corner angles to form a mounting frame, wherein the flange profile (1) has a cross-section that is of an essentially L-shaped design, wherein one leg (2) of the L is profiled as a double-walled leg, open on one side, for engaging over the edge areas of the air duct elements, and the other leg (5) is profiled as a hollow chamber (8) for receiving a comer angle leg, wherein in the transition area of these two legs (2, 5) a double wall to separate the two legs (2, 5) is formed by folding back by 180°, this wall touching one of the wall areas (6 or 7) with its nose of the back-fold (9a or 9b),
**characterised in that**
the wall area (6 or 7) and the nose of the back-fold (9a or 9b) are connected to one another via a laser weld seam (10).

2. Flange profile in accordance with claim 1, **characterised in that** the laser weld seam (10) is located in the smooth wall (6) that lies in the plane of separation in the working position.

3. Flange profile in accordance with claim 1, **characterised in that** the laser weld seam (10) is located in the rear profile wall (7) that faces away from the plane of separation.

## Revendications

1. Profilé de bride pour emboîter sur des bords de butée d'éléments de canalisation d'air et pour loger des cornières d'angle destinées à former un cadre de montage, le profilé des profilés de bride (1) étant conçu avec une section sensiblement en forme de L, une branche en L (2) étant profilée sous la forme d'une branche ouverte d'un coté à double paroi pour recouvrir les zones périphériques des éléments de canalisation d'air et l'autre branche (5) comme une chambre creuse (8) pour loger une branche de cornière d'angle, une double paroi séparant les deux branches (2, 5) étant formée dans la zone de transition de ces deux branches (2, 5) par le repliage en arrière de 180°, laquelle paroi touche l'une des zones de paroi (6 ou 7) avec son ergot de pliage en arrière,
**caractérisé en ce que**
la zone de paroi (6 ou 7) et l'ergot de pliage en arrière (9a ou 9b) sont reliés entre eux au moyen d'un cordon de soudure au laser (10)

2. Profilé de bride selon la revendication 1,
**caractérisé en ce que**
le cordon de soudure au laser (10) se trouve dans la paroi (6) lisse et disposée dans le plan de joint de séparation dans la position d'usage.

3. Profilé de bride selon la revendication 1,
**caractérisé en ce que**
le cordon de soudure au laser (10) se trouve dans la paroi du profilé (7) côté arrière opposé au plan du joint de séparation.
